# EUROPÄISCHE PATENTSCHRIFT

(11) **EP 0 419 977 B1**
(45) Veröffentlichungstag und Bekanntmachung des Hinweises auf die Patenterteilung: **29.11.1995**
(21) Anmeldenummer: 90117782.4
(22) Anmeldetag: 15.09.1990
(51) Int. Cl.: C08L 67/06, C08K 3/00, C08K 5/00, C08K 5/04, C08K 3/04

(54) **Verfahren zur Herstellung von pigmentierten, härtbaren Polyesterformmassen**
Process for the preparation of pigmented, curable polyester moulding compositions
Procédé pour la préparation de compositions à mouler de polyester durcissables pigmentées

(30) Priorität: 26.09.1989 DE 3931998
(43) Veröffentlichungstag der Anmeldung: 03.04.1991
(73) Patentinhaber: BASF Aktiengesellschaft, 67063 Ludwigshafen (DE)
(72) Erfinder: Heel, Helmut, Dr., W-6701 Dannstadt-Schauernheim (DE); Holoch, Jan, Dr., W-6906 Leimen (DE); Esswein, Gerd, Dr., W-6701 Maxdorf (DE); Goffing, Friedrich, Dr., W-6710 Frankenthal (DE)

(56) Entgegenhaltungen:
- EP-A- 272 127
- DE-A- 2 243 991
- DE-A- 3 943 157
- FR-A- 2 137 742
- US-4009225
- Römpp 1985, Band 4,S.2508

## Beschreibung

Die Erfindung betrifft ein Verfahren zur Herstellung von pigmentierten, härtbaren Polyesterformmassen, die einen ungesättigten Polyester, copolymerisierbare Monomere, ein thermoplastisches Polymeres, sowie ein Farbpigment enthalten.

Ein wichtiges Einsatzgebiet ungesättigter Polyesterharze sind SMC- und BMC-Formulierungen. SMC (sheet molding compound)-Massen sind flächige Halbzeuge aus glasfaserverstärkten, gefüllten Polyesterharzen, die in einer Presse verformt und gehärtet werden. BMC (bulk molding compound)-Massen sind mit Füllstoffen und Kurzfasern verstärkte Polyesterharze, die durch Spritzguß verarbeitet werden. Zur Herstellung solcher Massen wird das Harz mit einem Thermoplast als Antischrumpfkomponente, Glasfasern, Füllstoffen und einem Erdalkalioxid oder -hydroxid als Eindickmittel abgemischt.

Häufig sollen SMC und BMC zu homogen pigmentierten, beispielsweise tiefschwarzen Formteilen ausgehärtet werden. Dazu wird der Formulierung ein Pigment, z.B. Ruß, zugesetzt, entweder in reiner Form oder als Paste (z.B. US-A-3 284 232 und US-A-4 009 225). Die Schwarzpaste setzt sich aus dem Pigment und einem niederviskosen ungesättigten Polyester zusammen. Wird auf die beschriebenen Weisen gearbeitet, ist der Schwärzungsgrad oft unbefriedigend. Meist werden die Formteile bestenfalls dunkelgrau. Auch die Homogenität der Einfärbung ist in vielen Fällen unzureichend.

In EP-A-272 127, Beispiel 26 ist eine homogen eingefärbte SMC-Masse beschrieben. Dabei wird zunächst (Beispiel 1) ein reaktive Gruppen enthaltendes Polystyrol durch Copolymerisation von Styrol mit Isopropenyloxazolin hergestellt. Dieses Polystyrol wird dann in einem Kneter mit Ruß vermischt. Dabei reagieren die Oxazolin-Gruppen mit funktionellen Gruppen, die sich an der Oberfläche der Rußpartikel befinden. Das gebildete Ruß-Pfropfpolymere wird dann mit dem Polyesterharz vermischt. Diese aufwendige Arbeitsweise wird angewandt, weil es nach Seite 1, Zeilen 15/16 äußerst schwierig ist, Ruß unter üblichen Bedingungen einheitlich mit anderen Substanzen (z.B. thermoplastischen Polymeren oder thermisch härtbaren Harzen) zu vermischen oder in diesen zu dispergieren.

Der Erfindung lag daher die Aufgabe zugrunde, ein einfaches und billiges Verfahren zur Herstellung von homogen pigmentierten, härtbaren Formmassen zu entwickeln.

Diese Aufgabe wird erfindungsgemäß dadurch gelöst, daß man das Pigment mit Hilfe eines Extruders in einem geschmolzenen thermoplastischen Polymeren dispergiert und dieses nach üblichen Methoden mit dem Polyesterharz vermischt.

Gegenstand der Erfindung ist demzufolge ein Verfahren zur Herstellung von pigmentierten, härtbaren Formmassen gemäß Ansprüchen 1 und 2
Zu den Komponenten ist folgendes zu sagen:
A) Als ungesättigte Polyester A eignen sich die üblichen Kondensationsprodukte aus mehrwertigen, insbesondere zweiwertigen Carbonsäuren und deren veresterbaren Derivaten, insbesondere deren Anhydriden, die mit mehrwertigen, insbesondere zweiwertigen Alkoholen esterartig verknüpft sind, und gegebenenfalls zusätzlich Reste einwertiger Carbonsäuren oder einwertiger Alkohole enthalten, wobei zumindest ein Teil der Einsatzstoffe über ethylenisch ungesättigte, copolymerisationsfähige Gruppen verfügen muß.
   Als Alkoholkomponenten eignen sich z.B. Ethylenglykol, Propylenglykol-1,2, Propandiol-1,3, Butandiol-1,3, Butandiol-1,4, Hexandiol-1,6, Hexantriol-1,2,6, Neopentylglykol, Diethylenglykol, Triethylenglykol, Diproyplenglykol, Cyclohexandiol-1,2, hydriertes Bisphenol A, Cyclohexandimethanol, ethoxyliertes Bisphenol A sowie Dihydroxymethyltricyclodecan, Trimethylolpropan, Glycerin und Pentaerythrit.
   Geeignete Carbonsäuren bzw. deren Derivate sind zweibasische olefinisch ungesättigte Carbonsäuren, wie z.B. Maleinsäure, Fumarsäure, Chlormaleinsäure, Itakonsäure, Citraconsäure, Methylenglutarsäure und Mesaconsäure bzw. deren Ester oder vorzugsweise deren Anhydride. In die Polyester können andere modifizierend wirkende zweibasische, ungesättigte und/oder gesättigte, sowie aromatische Carbonsäuren eingebaut werden, z.B. Bernsteinsäure, Glutarsäure, Adipinsäure, Sebacinsäure, o-Phthalsäure, Isophthalsäure, Terephthalsäure, Tetrahydrophthalsäure und Endomethylentetrahydrophthalsäure.
B) Als copolymerisierbare, ethylenisch ungesättigte monomere Verbindungen kommen die üblicherweise zum Herstellen ungesättigter Polyesterformmassen verwendeten Allyl- und vorzugsweise Vinylverbindungen in Frage. Vinylaromaten, wie Styrol, substituierte Styrole, wie p-Chlorstyrol oder Vinyltoluol, Ester der Acrylsäure und Methacrylsäure mit 1 bis 18 Kohlenstoffatome enthaltenden Alkoholen, wie Methacrylsäuremethylester, Acrylsäurebutylester, Ethylhexylacrylat, Hydroxypropylacrylat, Dihydrodicyclopentadienylacrylat, Butandioldiacrylat und (Meth)acrylsäureamide, Allylester, wie Diallylphthalat, und Vinylester wie Ethylhexansäurevinylester, Vinylacetat, Vinylpropionat, Vinylpivalat und andere. Desgleichen eignen sich Gemische der genannten olefinisch ungesättigten Monomeren. Bevorzugt geeignet als Komponente B sind Styrol, p-Methylstyrol, Chlorstyrol, Vinyltoluol, Divinylbenzol und Diallylphthalat. Die Komponente B ist in der Formmasse in Mengen von 30 bis 150, vorzugsweise von 70 bis 120 Gew.-%, bezogen auf A, enthalten.
C) Die thermoplastische polymere Verbindung C besitzt zwei Funktionen. Erstens wirkt sie bei der Härtung des SMC oder BMC schrumpfmindernd und verbessert dadurch die Oberflächenqualität des Formteils. Zweitens bringt sie das Pigment in einer derart geeigneten Form in die Masse ein, daß nach der Härtung ein homogen eingefärbtes Formteil erhalten wird.
   Als thermoplastisches Polymer kommen z.B. Polystyrol, schlagfest modifiziertes Polystyrol, Polymethylmethacrylat, Polyvinylacetat, Ethylenvinylacetatcopolymer und entsprechende Copolymere und Pfropfcopolymere in Frage. Es eignen sich auch gesättigte Polyester und thermoplastische Polyurethane. Ebenfalls geeignet sind kautschukartige Blockcopolymere, insbesondere solche aus 40 bis 95 Gew.-% eines Diolefins, z.B. Butadien, Isopren oder Chloropren, und 60 bis 5 Gew.-% eines Vinylaromaten, z.B. Styrol oder p-Methylstyrol.
   Im Gegensatz zu den Polymeren nach EP-A-272 127 enthält das thermoplastische Polymere C keine mit Ruß reaktiven Gruppen.
   Die Komponente C ist in der Formmasse in Mengen von 1 bis 100, vorzugsweise 5 bis 50 Gew.-%, bezogen auf A, enthalten.
D) Als Farbpigment werden vorzugsweise die handelsüblichen Ruße verwendet, die z.B. nach dem Furnace-, Channel- oder Flammrußverfahren hergestellt wurden. Bei der Auswahl des Rußes ist jedoch zu berücksichtigen, daß einige Sorten das Härtungsverhalten des SMC oder BMC stark beeinflussen.
   Daneben kommen die üblichen Pigmente in Frage, z.B. als organische Pigmente
   Heliogenblau® (Phthalocyaninblau)
   Paliogenrot® (Perylenrot)
   Styrolgelb® (Pyrazolongelb)
   Neozaponrot® (Chrom-azo-Komplex)
   Paliotolgelb® (Isoindolinongelb)
   Thermoplastrot® (Anthrachinonrot)
   und als anorganische Pigmente Titandioxid, Eisen(III)oxid, Pinkrot, Chrom(III)-oxid, Cobaltblau, Ultramarin.
   Zweckmäßigerweise werden solche Pigmente eingesetzt, die unter den Bedingungen der radikalischen Polymerisation nicht zerstört oder geschädigt werden.
   Die Komponente D ist in der Formmasse in Mengen von 0,1 bis 15 Gew.-%, bezogen auf A, enthalten. Bei Ruß und anorganischen Pigmenten sind 2 bis 10 Gew.-%, bei organischen Pigmenten 0,2 bis 2 Gew.-% bevorzugt.

Als weitere übliche Zusatzstoffe sind Verstärkungsfasern, Füllstoffe, Inhibitoren, Initiatoren und Eindickmittel zu nennen.

Als Verstärkungsfasern kommen in Frage anorganische und organische Fasern als Rovings oder flächige, gegebenenfalls daraus gewebte Gebilde, wie Matten, z.B. aus Glas, Kohlenstoff, Asbest, Cellulose und synthetische organische Fasern, wie Polyethylen, Polycarbonsäureester, Polycarbonate und Polyamide. Sie sind in der Formmasse vorzugsweise in Mengen von 50 bis 150 Gew.-%, bezogen auf A+B+C, enthalten.

Geeignete Füllstoffe sind z.B. übliche feinpulverige oder körnige anorganische Füllstoffe, wie Kreide, Kaolin, Quarzmehl, Dolomit, Schwerspat, Metallpulver, Aluminiumoxidhydrat, Zement, Talkum, Kieselgur, Holzmehl, Holzspäne und dergleichen. Sie sind in der Formmasse vorzugsweise in Mengen von 30 bis 300 Gew.-%, bezogen auf A+B+C enthalten.

Als Inhibitoren kommen phenolische Verbindungen, wie Hydrochinon, substituierte Hydrochinone, Brenzkatechin, tert.-Butylbrenzkatechin, kernsubstituierte Brenzkatechine, Chinone, wie Benzochinon, Naphthochinon, Chloranil, Nitrobenzole, wie m-Dinitrobenzol, Thiodiphenylamin, N-Nitrosoverbindungen,wie N-Nitrosodiphenylamin und Salze von N-Nitroso-N-cyclohexylhydroxylamin sowie deren Gemische in Frage. Als zusätzliche Stabilisatoren eignen sich auch Salze des zweiwertigen Kupfers, beispielsweise Kupfernaphthenat oder -oktoat und quarternäre Ammoniumsalze. Die Inhibitoren sind in der Formmasse vorzugsweise in Mengen von 0,005 bis 0,5 Gew.-%, bezogen auf A+B+C, enthalten.

Als Polymerisationsinitiatoren werden übliche, in der Wärme Radikale bildende organische Peroxide eingesetzt. Geeignete Initiatoren sind z.B.: Dibenzoylperoxid, tert.-Butylperoktoat, tert.-Butylperbenzoat, Dicumylperoxid, Di-tert.-Dibutyl-peroxid und Perketale, wie z.B. Trimethylcyclohexanonperketal, sowie Percarbonate. Auch CC-labile Verbindungen und Azoverbindungen sind geeignet. Die Initiatoren sind in der Formmasse vorzugsweise in Mengen von 0,1 bis 5 Gew.-%, bezogen auf A+B+C, enthalten.

Als Eindickmittel werden Oxide oder Hydroxide des Lithiums, Magnesiums oder Calciums, Aluminiums oder Titans eingesetzt. Bevorzugt ist Magnesiumoxid.Die Eindickmittel sind in der Formmasse vorzugsweise in Mengen von 0,2 bis 5 Gew.-%, bezogen auf A+B+C, enthalten.

Als weitere übliche Zusatzstoffe kommen in Frage:
- Gleitmittel, wie Zink-, Magnesium- und Calciumstearat sowie Polyalkylenetherwachse,
- Paraffine zur Verminderung der Monomerenverdunstung und zur Ausbildung einer klebfreien Oberfläche.
- Härtungsbeschleuniger, z.B. Oktoate oder Naphthenate von Kupfer, Blei, Calcium, Magnesium, Cer und insbesondere von Mangan und Kobalt; ferner aromatische Amine, wie Dimethylanilin und Diethylanilin.
- Eindickungsbeschleuniger, z.B. Ammoniumchloride, Phosphoniumchloride, Sulfoniumhalogenide, Wasser, Polyole oder Propandiol-1,2.

Zum Einarbeiten der Pigmente werden diese in dem thermoplastischen Polymeren C bei Temperaturen im Bereich des Schmelzpunktes des Thermoplasten, vorzugsweise etwas oberhalb davon, dispergiert. Dies wird erfindungsgemäß auf einen Extruder, vorzugsweise einem Doppelschneckenextruder mit hoher Scherwirkung durchgeführt. Das Dispergieren dauert im allgemeinen höchstens 5 min, vorzugsweise beträgt die Einarbeitungszeit 2 bis 4 min. Die Konzentration des Pigmentes im Gemisch beträgt vorzugsweise 5 bis 50 Gew.-%. Es ist zweckmäßig, das Pigment nur in einem Teil des Polymeren C, z.B. in 10 bis 50 % der Gesamtmenge an C, zu dispergieren und den Rest dann später separat zuzumischen. Dabei ist es auch möglich, zwei verschiedene Polymere C einzusetzen.

Die Polymer/Pigment-Vormischung wird dann nach üblichen Methoden mit den anderen Komponenten des Polyesterharzes vermischt. Dabei ist es zweckmäßig, die Vormischung in dem Monomeren B zu lösen. Dabei findet überraschenderweise keine Separation des Pigmentes statt. Die Komponenten werden auf üblichen Mischaggregaten, z.B. in einem Rührwerk vermischt; mit der erhaltenen flüssigen Mischung werden dann Glasfasern getränkt. Die erhaltenen Prepregs werden dann gegebenenfalls eingedickt und schließlich nach üblichen Methoden zu Formteilen ausgehärtet.

Die in den folgenden Beispielen genannten Teile und Prozente beziehen sich auf das Gewicht.

### Beispiel 1

### A. Herstellung des ungesättigten Polyesterharzes

98 Teile Maleinsäureanhydrid, 61 Teile Propylenglykol und 44 Teile Dipropylenglykol werden unter Rühren und Darüberleiten von Stickstoff innerhalb von 2 Stunden auf 200°C erhitzt. Die Kondensation wird bis Säurezahl 30 fortgesetzt. 170 Teile des so erhaltenen ungesättigten Polyesters werden nach Zugabe von 0,026 Teilen Hydrochinon bei Temperaturen unter 120°C in 92 Teilen Styrol gelöst.

### B. Rußhaltige Polymerkomponente

Ein Standardpolystyrol und ein Ruß (Spezialschwarz 4, Fa. Degussa) werden im Verhältnis 3:1 kontinuierlich in einem Doppelschneckenextruder innerhalb von 3 min bei etwa 100°C gemischt und anschließend granuliert. 100 Teile dieses so erhaltenen schwarzen Polystyrols werden nach Zugabe von 0,03 Teilen p-Benzochinon in 203 Teilen Styrol gelöst.

### C. Rußfreie Polymerkomponente

100 Teile schlagfestes Polystyrol (Standardqualität, d₅₀-Wert: 2 bis 3 »m, Viskositätsmittel der Hartmatrix = 175 kg/mol) werden nach Zugabe von 0,03 Teilen p-Benzochinon in 203 Teilen Styrol gelöst.

### D. Herstellung der Formmassen

Mit einem schnellaufenden Rührwerk (ca. 1000 min⁻¹) werden folgende Mischungen hergestellt:

| | I Gew.-Teile | II (Vergleich) Gew.-Teile |
|---|---|---|
| UP-Harz | 60 | 60 |
| Rußhaltige Hochpolymerkomponente | 10 | - |
| Rußfreie Hochpolymerkomponente | 30 | 40 |
| Ruß | - | 2,5 |
| Styrol | 5 | 5 |
| Calciumcarbonat | 180 | 180 |
| Zinkstearat | 4,5 | 4,5 |
| tert.-Butylperbenzoat | 1,5 | 1,5 |
| MgO-Paste (35 %ig) | 2,5 | 2,5 |

Auf einer Prepreganlage werden geschnittene Glasrovings (l = 2,5 cm) mit den Mischungen zwischen Polyethylenfolien getränkt (Glasgehalt des SMCs: 30 %). Nach einer Reifezeit von 1 Woche werden die Abdeckfolien abgezogen und die imprägnierten Matten in einem Stahlwerkzeug (Größe ca. 45 x 50 cm) zu Formteilen verpreßt (60 bar, 145°C, 3 min).

Formteile aus Mischung I sind homogen schwarz eingefärbt, während Formteile aus Mischung II deutliche Inhomogenitäten in der Einfärbung und einen geringeren Schwärzungsgrad aufweisen.

### Beispiel 2

### A. Herstellung des ungesättigten Polyesterharzes

98 Teile Maleinsäureanhydrid, 61 Teile Propylenglykol und 44 Teile Dipropylenglykol werden unter Rühren und Darüberleiten von Stickstoff innerhalb von 2 Stunden auf 200°C erhitzt. Die Kondensation wird bis Säurezahl 30 fortgesetzt. 170 Teile des so erhaltenen ungesättigten Polyesters werden nach Zugabe von 0,026 Teilen Hydrochinon bei Temperaturen unter 120°C in 92 Teilen Styrol gelöst.

### B. Gelbgefärbte Polymerkomponente

Ein Standardpolystyrol und Styrolgelb G der BASF werden im Verhältnis 4:1 kontinuierlich in einem Doppelschneckenextruder innerhalb von 3 min bei etwa 100°C gemischt und anschließend granuliert. 100 Teile dieses so erhaltenen gelben Polystyrols werden nach Zugabe von 0,03 Teilen p-Benzochinon in 203 Teilen Styrol gelöst.

### C. ungefärbte Polymerkomponente

100 Teile schlagfestes Polystyrol (Standardqualität, d₅₀-Wert: 2 bis 3 »m, Viskositätsmittel der Hartmatrix = 175 kg/mol) werden nach Zugabe von 0,03 Teilen p-Benzochinon in 203 Teilen Styrol gelöst.

### D. Herstellung der Formmassen

Mit einem schnellaufenden Rührwerk (ca. 1000 min⁻¹) werden folgende Mischungen hergestellt:

| | I Gew.-Teile | II (Vergleich) Gew.-Teile |
|---|---|---|
| UP-Harz | 60 | 60 |
| gefärbte Hochpolymerkomponente | 12,1 | - |
| ungefärbte Hochpolymerkomponente | 27,9 | 40 |
| Farbstoff | - | 0,8 |
| Styrol | 5 | 5 |
| Calciumcarbonat | 180 | 180 |
| Zinkstearat | 4,5 | 4,5 |
| tert.-Butylperbenzoat | 1,5 | 1,5 |
| MgO-Paste (35 %ig) | 2,5 | 2,5 |

Auf einer Prepreganlage werden geschnittene Glasrovings (l = 2,5 cm) mit den Mischungen zwischen Polyethylenfolien getränkt (Glasgehalt des SMCs: 30 %). Nach einer Reifezeit von 1 Woche werden die Abdeckfolien abgezogen und die imprägnierten Matten in einem Stahlwerkzeug (Größe ca. 45 x 50 cm) zu Formteilen verpreßt (60 bar, 145°C, 3 min).

Formteile aus Mischung I sind homogen gelb eingefärbt, während Formteile aus Mischung II deutliche Inhomogenitäten in der Einfärbung und eine geringere Farbtiefe aufweisen.

### Beispiel 3

### A. Herstellung des ungesättigten Polyesterharzes

98 Teile Maleinsäureanhydrid, 61 Teile Propylenglykol und 44 Teile Dipropylenglykol werden unter Rühren und Darüberleiten von Stickstoff innerhalb von 2 Stunden auf 200°C erhitzt. Die Kondensation wird bis Säurezahl 30 fortgesetzt. 170 Teile des so erhaltenen ungesättigten Polyesters werden nach Zugabe von 0,026 Teilen Hydrochinon bei Temperaturen unter 120°C in 92 Teilen Styrol gelöst.

### B. Blaugefärbte Polymerkomponente

Ein Standardpolystyrol und Heliogenblau der BASF werden im Verhältnis 9:1 kontinuierlich in einem Doppelschneckenextruder innerhalb von 3 min bei etwa 100°C gemischt und anschließend granuliert. 100 Teile dieses so erhaltenen blauen Polystyrols werden nach Zugabe von 0,03 Teilen p-Benzochinon in 203 Teilen Styrol gelöst.

### C. Ungefärbte Polymerkomponente

100 Teile schlagfestes Polystyrol (Standardqualität, d₅₀-Wert: 2 bis 3 »m, Viskositätsmittel der Hartmatrix = 175 kg/mol) werden nach Zugabe von 0,03 Teilen p-Benzochinon in 203 Teilen Styrol gelöst.

### D. Herstellung der Formmassen

Mit einem schnellaufenden Rührwerk (ca. 1000 min⁻¹) werden folgende Mischungen hergestellt:

| | I Gew.-Teile | II (Vergleich) Gew.-Teile |
|---|---|---|
| UP-Harz | 60 | 60 |
| gefärbte Hochpolymerkomponente | 30,3 | - |
| ungefärbte Hochpolymerkomponente | 9,7 | 40 |
| Farbstoff | - | 1,0 |
| Styrol | 5 | 5 |
| Calciumcarbonat | 180 | 180 |
| Zinkstearat | 4,5 | 4,5 |
| tert.-Butylperbenzoat | 1,5 | 1,5 |
| MgO-Paste (35 %ig) | 2,5 | 2,5 |

Auf einer Prepreganlage werden geschnittene Glasrovings (l = 2,5 cm) mit den Mischungen zwischen Polyethylenfolien getränkt (Glasgehalt des SMCs: 30 %). Nach einer Reifezeit von 1 Woche werden die Abdeckfolien abgezogen und die imprägnierten Matten in einem Stahlwerkzeug (Größe ca. 45 x 50 cm) zu Formteilen verpreßt (60 bar, 145°C, 3 min).

Formteile aus Mischung I sind homogen blau eingefärbt, während Formteile aus Mischung II deutliche Inhomogenitäten in der Einfärbung und eine geringere Farbtiefe aufweisen.

### Beispiel 4

### A. Herstellung des ungesättigten Polyesterharzes

98 Teile Maleinsäureanhydrid, 105 Teile Propylenglykol werden unter Rühren und Darüberleiten von Stickstoff innerhalb von 2 Stunden auf 200°C erhitzt. Die Kondensation wird bis Säurezahl 30 fortgesetzt. 170 Teile des so erhaltenen ungesättigten Polyesters werden nach Zugabe von 0,026 Teilen Hydrochinon bei Temperaturen unter 120°C in 92 Teilen Styrol gelöst.

### B. Rotgefärbte Polymerkomponente

Ein säuremodifiziertes Polymethylmethacrylat (Säurezahl 6, Schmelzpunkt ca. 100°C) und Paliogenrot der BASF werden im Verhältnis 9:1 kontinuierlich in einem Doppelschneckenextruder innerhalb von 3 min bei etwa 120°C gemischt und anschließend granuliert. 100 Teile dieses so erhaltenen roten Polymethylmethacrylats werden nach Zugabe von 0,03 Teilen p-Benzochinon in 150 Teilen Styrol gelöst.

### C. Ungefärbte Polymerkomponente

100 Teile Polymethylmethacrylat (säuremodifiziert. Säurezahl 6, Schmelzpunkt ca. 100°C) werden nach Zugabe von 0,03 Teilen p-Benzochinon in 150 Teilen Styrol gelöst.

### D. Herstellung der Formmassen

Mit einem schnellaufenden Rührwerk (ca. 1000 min⁻¹) werden folgende Mischungen hergestellt:

| | I Gew.-Teile | II (Vergleich) Gew.-Teile |
|---|---|---|
| UP-Harz | 60 | 60 |
| rotgefärbte Hochpolymerkomponente | 20 | - |
| ungefärbte Hochpolymerkomponente | 20 | 40 |
| Farbstoff | - | 0,8 |
| Styrol | 5 | 5 |
| Calciumcarbonat | 180 | 180 |
| Zinkstearat | 4,5 | 4,5 |
| tert.-Butylperbenzoat | 1,5 | 1,5 |
| MgO-Paste (35 %ig) | 2,5 | 2,5 |

Auf einer Prepreganlage werden geschnittene Glasrovings (l = 2,5 cm) mit den Mischungen zwischen Polyethylenfolien getränkt (Glasgehalt des SMCs: 30 %). Nach einer Reifezeit von 1 Woche werden die Abdeckfolien abgezogen und die imprägnierten Matten in einem Stahlwerkzeug (Größe ca. 45 x 50 cm) zu Formteilen verpreßt (60 bar, 145°C, 3 min).

Formteile aus Mischung I sind homogen rot eingefärbt, während Formteile aus Mischung II deutliche Inhomogenitäten in der Einfärbung und eine geringere Farbtiefe aufweisen.

### Beispiel 5

### A. Herstellung des ungesättigten Polyesterharzes

98 Teile Maleinsäureanhydrid, 105 Teile Propylenglykol werden unter Rühren und Darüberleiten von Stickstoff innerhalb von 2 Stunden auf 200°C erhitzt. Die Kondensation wird bis Säurezahl 30 fortgesetzt. 170 Teile des so erhaltenen ungesättigten Polyesters werden nach Zugabe von 0,026 Teilen Hydrochinon bei Temperaturen unter 120°C in 92 Teilen Styrol gelöst.

### B. Blaugefärbte Polymerkomponente

Ein Polyvinylacetat (säuremodifziert. Säurezahl 7 bis 8, Schmelzpunkt 90 bis 110°C) und Heliogenblau der BASF werden im Verhältnis 20:1 kontinuierlich in einem Doppelschneckenextruder innerhalb von 3 min bei etwa 130°C gemischt und anschließend granuliert. 100 Teile dieses so erhaltenen blauen Polyvinylacetat werden nach Zugabe von 0,03 Teilen p-Benzochinon in 143 Teilen Styrol gelöst.

### C. Ungefärbte Polymerkomponente

100 Teile Polyvinylacetat (säuremodifiziert. Säurezahl 7 bis 8, Schmelzpunkt 90 bis 110°C) werden nach Zugabe von 0,03 Teilen p-Benzochinon in 143 Teilen Styrol gelöst.

### D. Herstellung der Formmassen

Mit einem schnellaufenden Rührwerk (ca. 1000 min⁻¹) werden folgende Mischungen hergestellt:

| | I Gew.-Teile | II (Vergleich) Gew.-Teile |
|---|---|---|
| UP-Harz | 60 | 60 |
| blaugefärbte Hochpolymerkomponente | 40 | - |
| ungefärbte Hochpolymerkomponente | - | 40 |
| Farbstoff | - | 0,8 |
| Styrol | 5 | 5 |
| Calciumcarbonat | 180 | 180 |
| Zinkstearat | 4,5 | 4,5 |
| tert.-Butylperbenzoat | 1,5 | 1,5 |
| MgO-Paste (35 %ig) | 2,5 | 2,5 |

Auf einer Prepreganlage werden geschnittene Glasrovings (l = 2,5 cm) mit den Mischungen zwischen Polyethylenfolien getränkt (Glasgehalt des SMCs: 30 %). Nach einer Reifezeit von 1 Woche werden die Abdeckfolien abgezogen und die imprägnierten Matten in einem Stahlwerkzeug (Größe ca. 45 x 50 cm) zu Formteilen verpreßt (60 bar, 145°C, 3 min).

Formteile aus Mischung I sind homogen blau eingefärbt, während Formteile aus Mischung II deutliche Inhomogenitäten in der Einfärbung und eine geringere Farbtiefe aufweisen.

## Patentansprüche

1. Verfahren zur Herstellung von schwarz pigmentierten, härtbaren Formmassen durch Vermischen von
A) 100 Gew.-Teilen eines ungesättigten Polyesters,
B) 30 bis 150 Gew.-Teilen eines mit A copolymerisierbaren Monomeren,
C) 1 bis 100 Gew.-Teilen eines thermoplastischen Polymeren, das frei ist von Gruppen, die mit Ruß eine chemische Reaktion eingehen können,
D) 0,1 bis 15 Gew.-Teilen Ruß
sowie gegebenenfalls weiteren üblichen Zusatzstoffen,
dadurch gekennzeichnet, daß das Pigment in mindestens einem Teil des thermoplastischen Polymeren C mit Hilfe eines Extruders bei Temperaturen im Bereich des Schmelzzpunktes des Thermoplasten dispergiert und diese Vormischung dann mit den anderen Komponenten vermischt wird.

2. Verfahren zur Herstellung von pigmentierten, härtbaren Formmassen durch Vermischen von
A) 100 Gew.-Teilen eines ungesättigten Polyesters,
B) 30 bis 150 Gew.-Teilen eines mit A copolymerisierbaren Monomeren,
C) 1 bis 100 Gew.-Teilen eines thermoplastischen Polymeren,
D) 0,1 bis 15 Gew.-Teilen eines von Ruß verschiedenen Farbpigments
sowie gegebenenfalls weiteren üblichen Zusatzstoffen,
dadurch gekennzeichnet, daß das Pigment in mindestens einem Teil des thermoplastischen Polymeren C mit Hilfe eines Extruders bei Temperaturen im Bereich des Schmelzpunktes des Thermoplasten dispergiert und diese Vormischung dann mit den anderen Komponenten vermischt wird.

## Claims

1. A process for preparing black-pigmented, curable molding compounds by mixing together
A) 100 parts by weight of an unsaturated polyester,
B) from 30 to 150 parts by weight of a monomer which is copolymerizable with A,
C) from 1 to 100 parts by weight of a thermoplastic polymer which is free of groups which can undergo a chemical reaction with carbon black,
D) from 0.1 to 15 parts by weight of carbon black
and optionally further customary additives,
characterized in that the pigment is dispersed in at least some of the thermoplastic polymer C with the aid of an extruder at temperatures within the range of the melting point of the thermoplastic and this premix is then mixed with the other components.

2. A process for preparing pigmented, curable molding compounds by mixing together
A) 100 parts by weight of an unsaturated polyester,
B) from 30 to 150 parts by weight of a monomer which is copolymerizable with A,
C) from 1 to 100 parts by weight of a thermoplastic polymer,
D) from 0.1 to 15 parts by weight of a color pigment other than carbon black
and optionally further customary additives,
characterized in that the pigment is dispersed in at least some of the thermoplastic polymer C with the aid of an extruder at temperatures within the range of the melting point of the thermoplastic and this premix is then mixed with the other components.

## Revendications

1. Procédé de préparation de matières à mouler durcissables, pigmentées noires, par mélange de
A) 100 parties en poids d'un polyester insaturé
B) 30 à 150 parties en poids d'un monomère copolymérisable avec A
C) 1 à 100 parties en poids d'un polymère thermoplastique qui est exempt de groupes pouvant entrer en réaction chimique avec du noir de fumée
D) 0,1 à 15 parties en poids de noir de fumée
ainsi éventuellement que d'autres additifs usuels,
caractérisé par le fait que l'on disperse le pigment dans au moins une partie du polymère thermoplastique C à l'aide d'une extrudeuse, à des températures au voisinage du point de fusion du thermoplaste et on mélange alors ce prémélange avec les autres composants.

2. Procédé de préparation de matières à mouler durcissables, pigmentées, par mélange de
A) 100 parties en poids d'un polyester insaturé
B) 30 à 150 parties en poids d'un monomère copolymérisable avec A
C) 1 à 100 parties en poids d'un polymère thermoplastique
D) 0,1 à 15 parties en poids d'un pigment colorant différent du noir de fumée
ainsi éventuellement que d'autres additifs usuels,
caractérisé par le fait que l'on disperse le pigment dans au moins une partie du polymère thermoplastique C à l'aide d'une extrudeuse, à des températures au voisinage du point de fusion du thermoplaste et on mélange alors ce prémélange avec les autres composants.
